# FASCICULE DE BREVET EUROPEEN

(11) **EP 1 608 903 B1**
(45) Date de publication et mention de la délivrance du brevet: **02.05.2007**
(21) Numéro de dépôt: 04742310.8
(22) Date de dépôt: 22.03.2004
(51) Int. Cl.: F16K 31/126

(54) **VANNE DE GONFLAGE ET DE DEGONFLAGE**
AUFBLAS- UND ABLASSVENTIL
INFLATING AND DEFLATING VALVE

(30) Priorité: 26.03.2003 FR 0303727
(43) Date de publication de la demande: 28.12.2005
(73) Titulaire: Syegon, 78000 Versailles (FR)
(72) Inventeur: ADRION, David, F-42300 Roanne (FR); MAQUAIRE, Michel, F-45160 Ardon (FR)
(74) Mandataire: Célanie, Christian
(86) Numéro de dépôt international: PCT/FR2004/000698
(87) Numéro de publication internationale: WO 2004/088189

(56) Documents cités:
- EP-A- 0 511 135
- DE-A- 3 844 267
- DE-C- 920 649
- FR-A- 2 822 918

## Description

Le secteur technique de la présente invention est celui des vannes de gonflage et de dégonflage de la capacité d'une roue d'un véhicule automobile.

On connaît, notamment par les brevets FR 2 616 194, FR 2 667 826 et FR 2 731 655, le principe des vannes permettant le gonflage, et le dégonflage des pneus de véhicules par commande à distance.

La technique mise en oeuvre lors de l'utilisation de ces vannes est celle de clapets capables, dans une position de laisser passer de l'air sous pression vers une capacité, dans une autre position de laisser s'échapper l'air contenu dans la capacité vers l'extérieur, et dans une position de repos d'isoler la capacité en fermant le circuit de circulation d'air.

Pour arriver à ce fonctionnement, on utilise une membrane soumise à un ressort et couplée à un clapet constitué d'une chambre et d'un moyen de fermeture, le moyen de fermeture le plus utilisé étant une bille. Ce système a montré de réelles performances sur les véhicules lourds.

Un inconvénient majeur de ce système réside dans le fait que le dégonflage ne se fait que de manière rapide, ce qui modifie, de manière nettement perceptible par le conducteur et en un temps très court, les caractéristiques de la liaison au sol du véhicule. Ce principe du dégonflage rapide est d'une réelle efficacité tant qu'il répond à une commande du conducteur (freinage d'urgence, passage rapide à un chemin accidenté,...) mais constitue un désagrément lorsqu'il provient de la logique du système de commande fonctionnant en mode autonome (passage automatique d'un seuil de changement des caractéristiques de route). L'utilisateur du véhicule est alors surpris par le bruit du dégonflage et par la modification des caractéristiques de la liaison au sol du véhicule.

Un inconvénient des systèmes cités précédemment réside dans le fait qu'ils comportent un mécanisme de fermeture dépendant du pilotage. Ainsi, en cas de défaillance du système de pilotage, la vanne reste dépendante de celui-ci et n'est donc pas en mesure de garantir une pression minimale dans le pneumatique.

D'autre part, de tels systèmes possèdent un élément libre sensible aux forces centrifuges auxquelles la roue est soumise.

On connaît également le brevet EP 0 511 135 qui décrit une vanne de gonflage, de dégonflage et de mesure de la pression dans une capacité, comprenant une membrane maintenue entre un couvercle et un corps de vanne, délimitant avec le couvercle une chambre de pilotage et avec le corps de vanne une chambre d'échappement, une valve solidaire du corps de vanne et un moyen mécanique assurant l'ouverture de ladite valve. Cependant le moyen mécanique assurant l'ouverture de la valve est un élément libre et indépendant de la membrane qui demeure sensible aux forces centrifuges auxquelles la roue est soumise.

L'objet de la présente invention est donc de remédier à ces problèmes en proposant une vanne de gonflage/dégonflage capable d'effectuer un dégonflage lent de la capacité, dont les coûts d'obtention seront réduits et dont les éléments resteront peu sensibles aux forces engendrant des dysfonctionnements

L'invention a donc pour objet une vanne de gonflage, de dégonflage et de mesure de la pression dans une capacité, comprenant une membrane maintenue entre un couvercle et un corps de vanne, délimitant avec le couvercle une chambre de pilotage et avec le corps de vanne une chambre d'échappement, cette dernière communiquant avec l'extérieur par au moins un alésage, la chambre de pilotage pouvant être en relation avec un circuit de pression-dépression au travers d'une tubulure, caractérisée en ce qu'elle comprend une valve, solidaire du corps de vanne et communiquant d'une part avec la capacité et d'autre part avec la chambre de pilotage, et un moyen mécanique solidaire de manière permanente de la membrane et assurant l'ouverture de ladite valve.

Selon une caractéristique, le moyen d'ouverture est fixé à la membrane.

Selon une autre caractéristique, le moyen d'ouverture est constitué d'un pont ou d'un multipode fixé à la membrane.

Selon encore une autre caractéristique, le moyen d'ouverture est une calotte, de forme sensiblement hémisphérique, constituée par la partie centrale de la membrane.

Selon une autre caractéristique, le couvercle présente une partie centrale de forme sensiblement concave et la calotte comporte des moyens lui permettant d'adopter successivement deux positions stables, une position concave pour laquelle la calotte est de même concavité que la partie centrale du couvercle et une position convexe pour laquelle la calotte est de concavité inverse par rapport à la partie centrale du couvercle.

Selon une autre caractéristique, la calotte de la membrane est partiellement ajourée.

Selon une autre caractéristique, la membrane est réalisée en matériau synthétique.

Selon une autre caractéristique, la membrane est une tôle métallique.

Selon une autre caractéristique, la membrane est réalisée par surmoulage d'un élastomère sur une armature métallique.

Selon une autre caractéristique, les ouvertures de la calotte sont dimensionnées de manière à engendrer des pertes de charges du flux les traversant, ces pertes de charges induisant une différence de pression entre la chambre de pilotage et la chambre d'échappement.

Selon une autre caractéristique, la surface intérieure du corps de vanne est de forme complémentaire avec la membrane, de manière à ce que la membrane épouse parfaitement la forme du corps de vanne lorsqu'elle vient s'appliquer contre celle-ci.

Une application de l'invention est l'installation de commande à distance du gonflage et du dégonflage d'une capacité comprenant une canalisation reliant la tubulure de la chambre de pilotage à deux dérivations menant, respectivement, à une source de pression-dépression, un distributeur à commande sélective placé sur chaque dérivation et un manomètre disposé sur la ligne entre la valve et les distributeurs.

Avantageusement, cette vanne est peu sensible aux forces centrifuges qui résultent de la vitesse de rotation élevée de la roue.

Un autre avantage réside dans le fait que ce clapet permet, en plus des fonctions initiales de la vanne, d'effectuer un dégonflage lent de la capacité.

D'autres caractéristiques, détails et avantages de l'invention ressortiront plus clairement de la description donnée ci-après à titre indicatif en relation avec des dessins parmi lesquels :
- la figure 1 est une coupe longitudinale d'une vanne de gonflage et de dégonflage selon un premier exemple de réalisation de l'invention,
- la figure 2 est une coupe longitudinale d'une vanne de gonflage et de dégonflage selon le même premier exemple de réalisation de l'invention, en phase de gonflage, de dégonflage ou de mesure de pression,
- les figure 3, 4a et 5 représentent en coupe longitudinale une vanne de gonflage et de dégonflage selon un autre exemple de réalisation de l'invention,
- la figure 4b est une coupe longitudinale représentant une variante de réalisation de l'invention,
- les figures 6a et 6b sont respectivement une vue de dessus et une vue en coupe de la membrane selon le même second exemple de réalisation de l'invention, et
- la figure 7 représente un exemple de réalisation de l'installation de commande à distance.

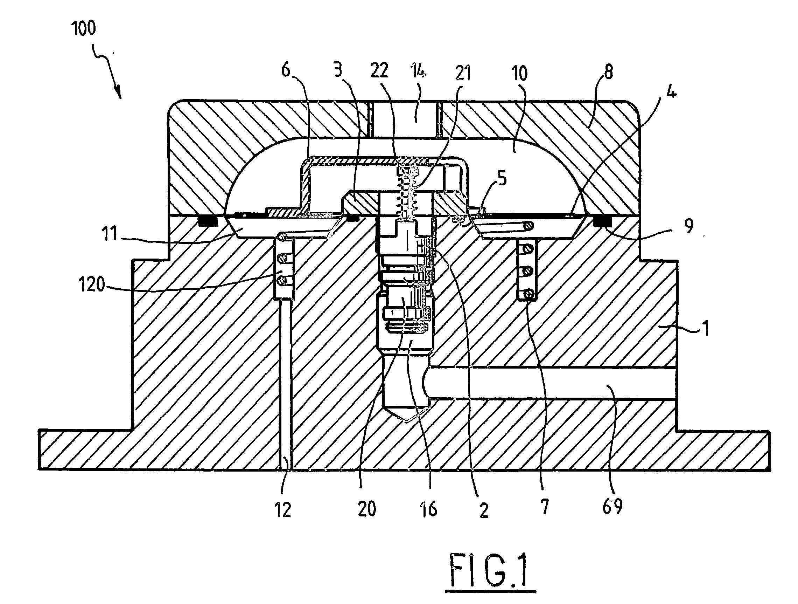

La figure 1 illustre un premier exemple de réalisation d'une vanne selon l'invention. La vanne 100 se présente sous la forme d'un élément globalement cylindrique, elle est constituée d'un corps 1 de vanne, d'un couvercle 8, d'une membrane 4, d'un actionneur 6 solidaire de la membrane 4, d'une valve 2 et d'un ressort 7. La valve 2 est une valve de type "génie civil" déjà connue et largement utilisée, notamment pour le gonflage de pneumatiques de véhicules. La valve 2 est classiquement composée d'une embase 20, d'un piston 22 et d'un ressort 21. La valve 2 est fixée (par exemple par vissage) dans une chambre 16 du corps 1 de vanne de manière à communiquer par sa partie supérieure avec une chambre de pilotage 10 et par sa partie inférieure avec un perçage 69 en communication avec la capacité. La membrane 4 est maintenue le long de son pourtour extérieur entre le couvercle 8 et le corps 1 de vanne. Un joint torique 9 assure l'étanchéité entre ces deux parties. La membrane 4 est fixée au corps 1 de vanne en étant maintenue au niveau de son pourtour intérieur entre le corps 1 de vanne et la rondelle 3 solidaire du corps de vanne. La membrane 4 délimite avec le couvercle 8 une chambre de pilotage 10 et avec le corps 1 de vanne une chambre d'échappement 11. Un perçage 12 effectué dans le corps 1 de vanne et débouchant dans une rainure circulaire 120 assure la communication entre la chambre d'échappement 11 et l'extérieur de la vanne. La pression régnant dans la chambre d'échappement 11 est ainsi continuellement égale à la pression atmosphérique.

La figure 1 représente la vanne en position de maintien de la pression : aucune pression n'est appliquée dans la chambre de pilotage 10, le ressort 7 exerce un effort suffisant entre le corps 1 de vanne et la membrane 4 pour que l'actionneur 6 n'applique aucun effort sur la valve 2.

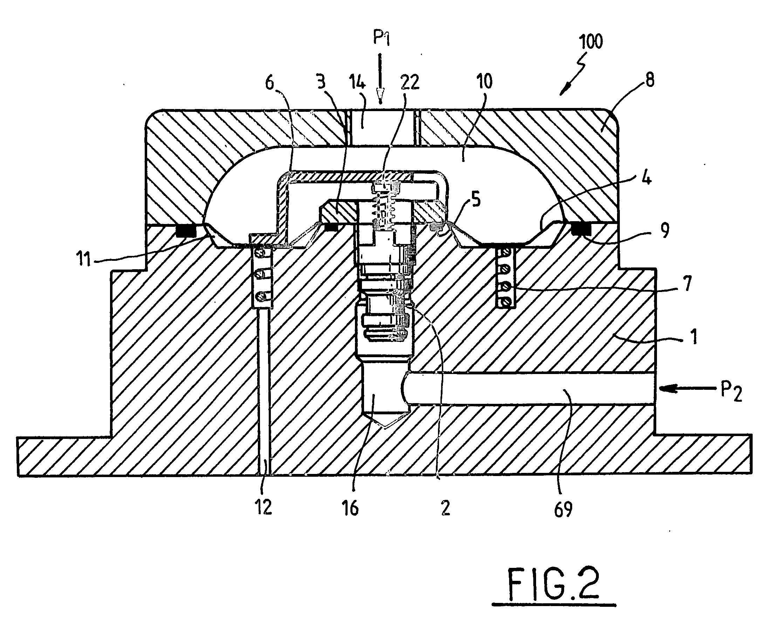

La figure 2 représente la vanne 100 en position de gonflage ou de dégonflage : la pression appliquée dans la chambre de pilotage 10 est supérieure à la pression de la chambre d'échappement (égale à la pression atmosphérique). Cette différence de pression est suffisante pour vaincre l'effort exercé par le ressort 7 entre le corps 1 de vanne et la membrane 4 et pour que l'actionneur 6 applique un effort sur la valve 2.

L'effort exercé par l'actionneur 6 sur le piston 22 de la valve 2 déplace celui-ci de manière à assurer une communication entre la capacité et la chambre de pilotage.

Lorsque la pression P₁ exercée dans la chambre de pilotage 10 est supérieure à la pression P₂ de la capacité, la communication peut s'effectuer librement de la chambre de pilotage vers la capacité. On effectue alors le gonflage de la capacité.

Lorsque la pression P₁ exercée dans la chambre de pilotage 10 est inférieure à la pression P₂ de la capacité, on effectue le dégonflage de la capacité. On sait que la vitesse de dégonflage est proportionnelle à la différence de pression entre la capacité et la chambre de pilotage. La vitesse de dégonflage est donc pilotable en faisant varier la pression P₁·

On peut également mesurer la pression régnant dans la capacité en équilibrant la pression P₁ jusqu'à atteindre la valeur P₂. On assure de cette façon la possibilité de mesurer la pression de la capacité. Un tel dispositif permet notamment de mesurer les basses pressions, inférieures à 10⁵ Pa, jusqu'à une valeur de l'ordre de 0,4.10⁵ Pa. Cette valeur de pression est particulièrement adaptée à une application de la valve dans les engins agricoles.

Il faut noter que la pression limite de fonctionnement en basse pression est fixée par le dimensionnement relatif des éléments constitutifs de la vanne. Elle dépend d'une part des efforts fournis par l'élément ressort 21 de la valve 2 et par le ressort 7 et d'autre part de la surface active de la membrane 4 et de son efficacité (rendement).

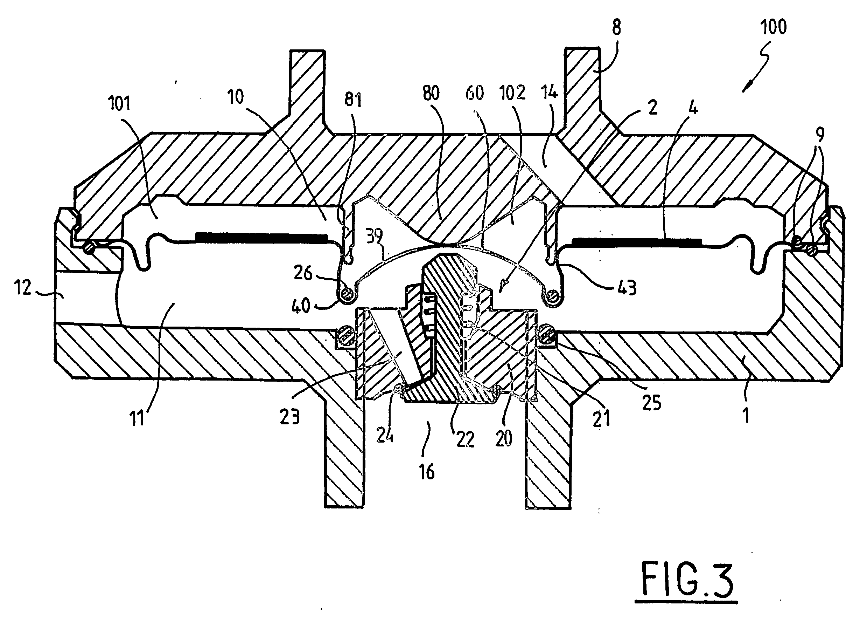

La figure 3 illustre un autre exemple de réalisation d'une vanne selon l'invention. La vanne 100 est constituée d'un corps 1 de vanne, d'un couvercle 8, d'une membrane 4 et d'une valve 2. La partie centrale 80 du couvercle 8 est bombée et est délimitée par une partie tubulaire 81. La valve 2 est une valve de type "génie civil" déjà connue et largement utilisée, notamment pour le gonflage de pneumatiques de véhicules. Dans cet exemple de réalisation, la valve 2 est classiquement constituée par un corps 20, un piston 22, un joint torique 24 assurant l'étanchéité entre le piston 22 et le corps 20 et un ressort 21 exerçant un effort entre le piston 22 et le corps 20 de manière à maintenir la valve fermée. La valve 2 est fixée (par exemple par vissage) dans une chambre 16 du corps de vanne de manière à pouvoir communiquer par sa partie supérieure avec une chambre de pilotage 10 et par sa partie inférieure avec la chambre 16 en communication avec une capacité (non représentée). La membrane 4 est maintenue le long de sa périphérie entre le couvercle 8 et le corps 1 de vanne. Un ou plusieurs joints toriques 9 assurent l'étanchéité entre ces deux parties. La membrane 4 délimite avec le couvercle 8 la chambre de pilotage 10 composée de deux espaces susceptibles de communiquer entre eux : une chambre centrale 102 délimitée par la partie centrale 60 de la membrane 4 formant calotte, la partie centrale 80 du couvercle 8 et la partie tubulaire 81 du couvercle et une chambre 101 de pression/dépression, située autour de la partie tubulaire 81. La membrane 4 délimite également avec le corps 1 de vanne une chambre d'échappement 11. La chambre de pression/dépression 101 est en relation avec un circuit de pression-dépression au travers d'une tubulure 14. Un perçage 12 effectué dans le corps 1 de vanne assure la communication entre la chambre d'échappement 11 et l'extérieur de la vanne.

La figure 3 représente la vanne en position de maintien de pression : aucune pression n'est appliquée dans la chambre de pilotage 10, la membrane 4 est dans sa position de repos et n'applique aucun effort sur la valve 2 qui est maintenue fermée grâce au ressort 21.

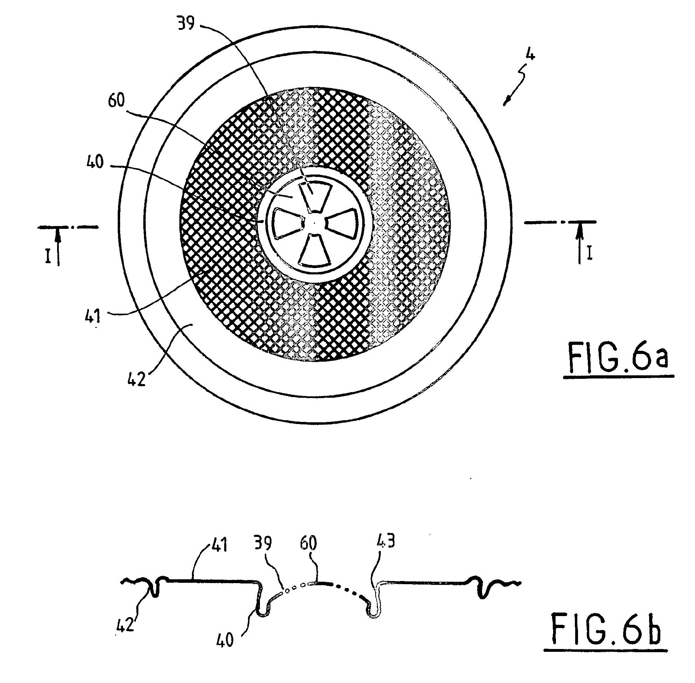

Les figure 6a et 6b sont respectivement une vue de dessus de la membrane 4 et une coupe transversale selon l'axe I-I. La membrane 4 est globalement constituée d'une calotte 60 située au centre de celle-ci, d'un anneau rigide 41, de bourrelets 40 et 43 situés entre l'anneau rigide 41 et la calotte 60, et d'un anneau souple 42 constituant une bande périphérique assurant l'étanchéité, le maintien en place et le centrage de la membrane. La calotte 60 est de forme sensiblement hémisphérique, susceptible d'adopter successivement deux positions stables, une position concave et une position convexe. La calotte 60 comporte des ouvertures 39 afin de permettre la circulation de fluide.

Une telle membrane, composée de parties dont les caractéristiques mécaniques sont différentes, sera par exemple réalisée en emboutissant une tôle métallique. Les parties souples telles l'anneau souple 42 et la calotte 60 seront réalisées avec une faible épaisseur de matière. Un autre mode de réalisation de la membrane est assuré par l'utilisation d'une tôle d'épaisseur sensiblement uniforme, dont les caractéristiques techniques sont compatibles avec le besoin de souplesse des zones 40, 43 et 42, et dont la rigidité de l'anneau rigide 41 sera assurée par exemple par "gaufrage", par emboutissage, par estampillage de formes aptes à conférer une rigidification radiale, ou encore par l'ajout de structures rigidifiantes. D'autres réalisations de la membrane sont envisageables, notamment l'utilisation de matériaux synthétiques, ou encore d'un polymère comportant une structure métallique.

Dans l'exemple de réalisation illustré par la figure 3, l'étanchéité entre la chambre centrale 102 et la chambre 101 de pression/dépression est réalisée par le bourrelet 43 s'appuyant directement sur la partie tubulaire 81 du couvercle. Cette étanchéité peut évidemment être améliorée par un joint torique, en utilisant une membrane en élastomère ou encore en déposant une couche d'élastomère ou de tout autre matériau étanche sur le bourrelet 43 du sur les parties du couvercle 8 en contact avec la membrane.

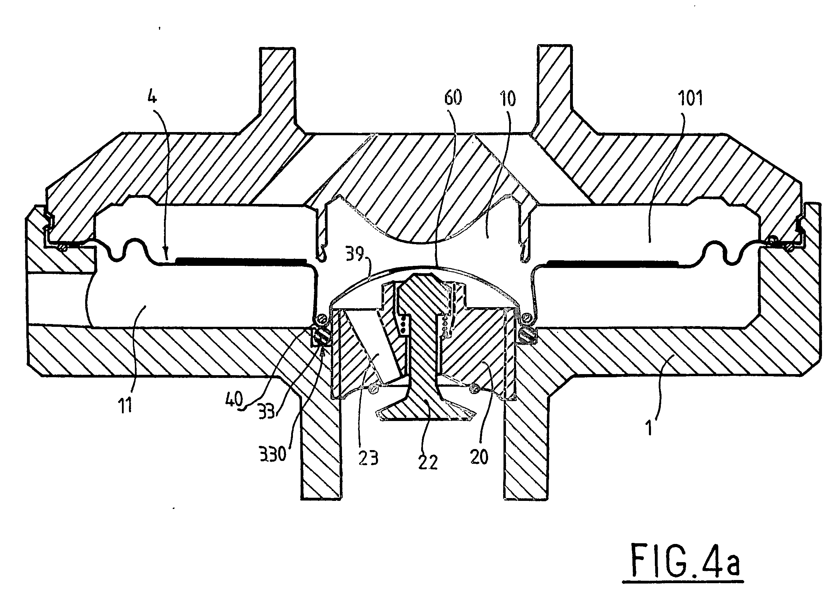

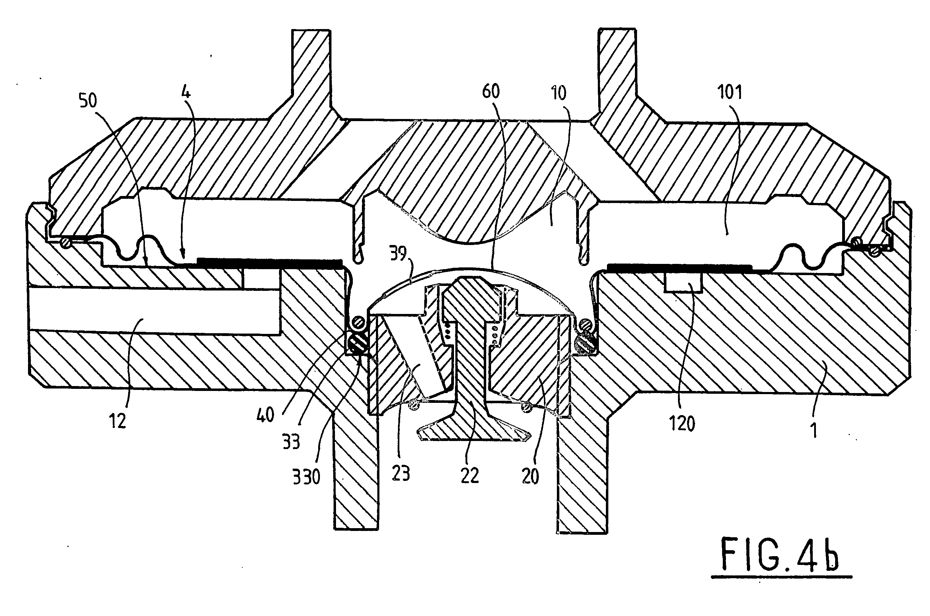

La figure 4a illustre la même vanne en phase de gonflage, de dégonflage lent ou de mesure de la pression de la capacité. La pression appliquée dans la chambre de pilotage 10 est supérieure à la pression de la chambre d'échappement 11 (égale à la pression atmosphérique). Cette différence de pressions est suffisante pour déplacer la membrane 4 vers le corps de vanne jusqu'à la position illustrée par la figure 4a. Un joint 33 (par exemple un joint torique) est disposé dans une gorge 330 du corps 1 de vanne de manière à assurer une étanchéité entre le bourrelet 40 et le corps 1 de vanne. La membrane 4 s'étant ainsi déplacée, la calotte 60 exerce un effort sur le piston 22 de valve qui se déplace et permet la circulation de fluide entre la capacité et le circuit de pression-dépression par l'intermédiaire d'un ou plusieurs conduits 23 de l'embase 20.

Lorsque la pression P₁ exercée dans la chambre de pilotage 10 est supérieure à la pression P₂ de la capacité, l'air se déplace de la chambre 10 de pilotage vers la capacité, on effectue alors le gonflage de la capacité.

Lorsque la pression P₁ exercée dans la chambre de pilotage 10 est inférieure à la pression P₂ de la capacité, on effectue le dégonflage de la capacité. La vitesse de dégonflage est proportionnelle à la différence de pression entre la capacité et la chambre de pilotage. La vitesse de dégonflage est donc pilotable en faisant varier la pression P₁. Cette pression P₁, est pilotée par le circuit de pression-dépression.

On peut également équilibrer la pression P₁ jusqu'à atteindre la valeur P₂. On assure de cette façon la possibilité de mesurer la pression de la capacité. Un tel dispositif permet notamment de mesurer les basses pressions, inférieures à 10⁵ Pa, jusqu'à une valeur de l'ordre de 0,4.10⁵ Pa. Cette valeur de pression est particulièrement adaptée à une application de la valve dans les engins agricoles.

Les ouvertures 39 de la calotte 60 sont dimensionnées de manière à engendrer des pertes de charges du flux les traversant lors du gonflage de la capacité. Ces pertes de charges induisent une différence de pression entre les chambres de pilotage 10 et d'échappement 11, ce qui génère un effort qui tend à déplacer la membrane 4 vers le corps 1 de vanne.

La figure 4b illustre une variante de réalisation du corps 1 de vanne. Le corps 1 de vanne est dimensionné de sorte que, lorsque l'anneau rigide 41 se déplace lors de la phase de gonflage ou de dégonflage lent, il se trouve en appui sur la surface 50 du corps 1 de vanne. Le perçage 12 débouche dans une gorge circulaire 120. La chambre d'échappement 11 est alors limitée à la gorge 120. Ainsi seule une partie de la membrane 4 est soumise à la contrainte due à la différence de pression entre la chambre de pilotage 10 et la chambre d'échappement 11. On veillera à ce que la surface 50 du corps de vanne soit complémentaire avec la forme de la membrane 4 afin que cette dernière s'applique parfaitement contre le corps 1 de vanne. On réalisera également la membrane 4 de manière à ce que les parties soumises à d'importantes différences de pression soient suffisamment résistantes.

Une telle réalisation a pour avantage d'une part de réduire les contraintes sur la membrane 4, dues aux différences de pressions, et d'autre part d'éviter tout risque d'hystérésis ou d'instabilité, notamment lors du dégonflage lent ou lors de l'utilisation faibles pressions.

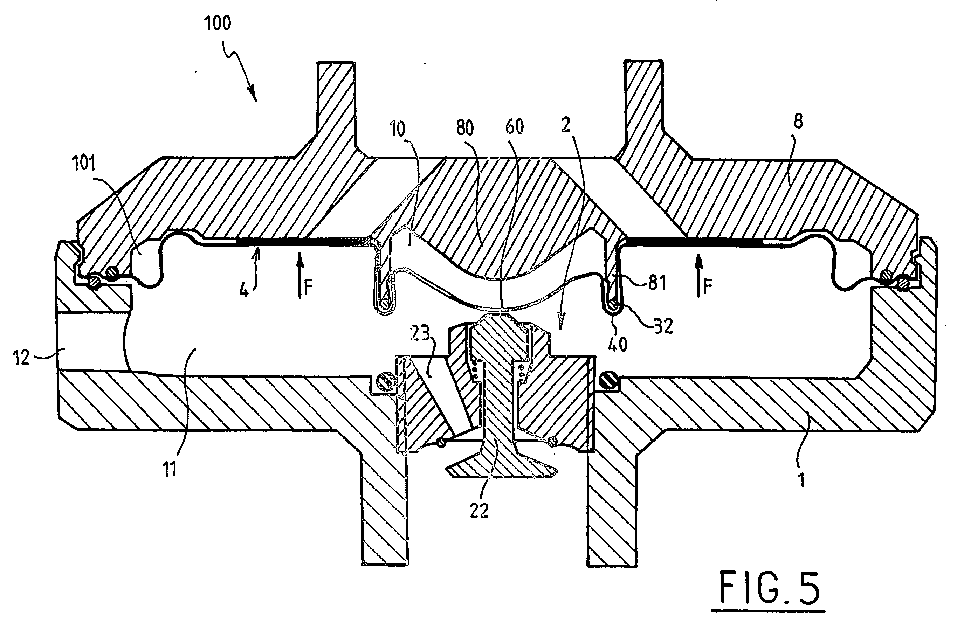

La figure 5 illustre la même vanne 100 en phase de dégonflage rapide. Le dégonflage rapide s'effectue en créant une dépression dans la chambre de pilotage 10. De la différence de pression entre la chambre de pilotage 10 et la chambre d'échappement 11 résulte un effort F qui déplace la membrane 4 vers le couvercle 8. L'effort F applique la partie bombée convexe de la calotte 60 contre la partie bombée concave de la partie centrale 80 du couvercle 8. L'effort F modifie la concavité de la calotte 60 qui devient concave. Le bourrelet 40 épouse la partie tubulaire 81 du couvercle. Un joint torique 32 assure l'étanchéité. La chambre de pilotage 10 est alors réduite à sa plus simple expression 102 entre la calotte 60 et la partie centrale 80 du couvercle 8.

Dans cette position, la calotte 60 dont la concavité a été inversée, vient exercer un effort sur le piston 22 de la valve 2, ce qui engendre une communication entre la chambre d'échappement 11 et la capacité. La pression de la capacité étant supérieure à la pression atmosphérique, le fluide s'échappe de la capacité qui se dégonfle.

Contrairement à la phase de dégonflage lent, on ne peut pas piloter la différence de pression entre la capacité et la chambre d'échappement. Le dégonflage se fait alors de manière rapide, ce qui peut être souhaitable, par exemple lors d'un dégonflage d'urgence.

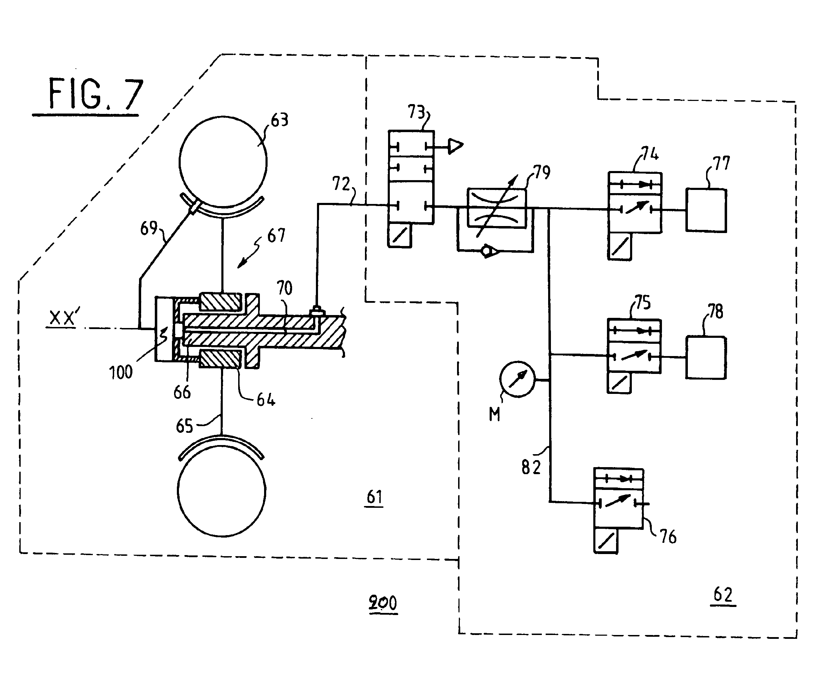

La vanne 100 ainsi réalisée peut être intégrée dans une installation de commande à distance du ou des pneumatiques d'un véhicule comme représenté sur la figure 7. Sur cette figure, on a représenté une installation 200 constituée d'un ensemble 61 au niveau de chaque roue 63 d'un véhicule non représenté et un ensemble 62 au niveau de la cabine du conducteur, du châssis du véhicule ou en tout autre endroit approprié. Chaque roue 63 est fixée de manière appropriée à un moyeu 64 par l'intermédiaire d'une jante 65. Le moyeu 64 est relié de manière classique à un axe de roulement 66 du véhicule. La vanne 100 est fixée à la roue 67 de manière appropriée à l'aide d'un joint tournant 71 et est reliée au pneumatique 63 grâce à une canalisation 69. Comme représenté sur la figure, la vanne 100 est montée proche de l'axe xx' de l'axe 66 de la roue. Cet axe 66 est percé d'une canalisation 70 pour mettre en communication l'ensemble 62 et la vanne 100 à l'aide d'un conduit 72. L'ensemble 62 est constitué de trois électrovannes 74, 75 et 76 et de plusieurs électrovannes 73 associée chacune à un mécanisme 79 d'étranglement.

L'électrovanne 73 est une électrovanne trois voies qui est positionnée en amont des trois autres électrovannes. Elle assure l'ouverture et la fermeture de la canalisation 72 vers la vanne 100. Elle assure également une fonction remise à l'air libre à l'aide de la troisième voie indiquée. Ainsi, il suffit de dupliquer seulement l'électrovanne 73 et le mécanisme 79 d'étranglement autant de fois que le véhicule possède de roues. Le mécanisme 79 d'étranglement de la canalisation est situé entre l'électrovanne 73 et les trois autres électrovannes. Le mécanisme 73 d'étranglement est un réducteur de débit unidirectionnel. Il permet de réduire le débit d'air dans un sens de circulation et de laisser normalement passer le flux d'air dans l'autre sens. La régulation de l'échappement peut être assurée par un moyen mécanique (par exemple une vis de réglage) ou par un moyen électromécanique (une bobine commandant l'étranglement).

L'électrovanne 74 est en relation avec une source d'air comprimé 77 permettant d'alimenter la roue 63 en air comprimé.

L'électrovanne 75 est en relation avec une source 78 de mise en dépression pour commander la vanne 100 en dépression.

L'électrovanne 76 est une vanne de mise à l'air libre.

L'installation selon l'invention permet également un contrôle aisé de la pression de gonflage à l'aide d'un manomètre M connecté sur la canalisation 82 reliant les électrovannes 73 et 76. On déplace la membrane 4 comme expliqué précédemment et illustré par les figures 4a et 4b et on laisse l'électrovanne 73 ouverte et l'électrovanne 76 fermée et après stabilisation de la pression on lit la mesure. Après lecture, on ouvre la l'électrovanne 73 pour fermer la vanne 100 en provoquant le déplacement de la membrane 4 et le retour en position fermée de la valve 2.

Ces figures illustrent des exemples de réalisation de l'invention qui ne sont évidemment pas limitatifs, on pourra par exemple réaliser l'invention en modifiant les dispositions des éléments, des perçages, ou encore en utilisant d'autres types de valves assurant la même fonction que celle proposée.

## Revendications

1. Vanne de gonflage, de dégonflage et de mesure de la pression dans une capacité (63), comprenant une membrane (4) maintenue entre un couvercle (8) et un corps (1) de vanne, délimitant avec le couvercle une chambre de pilotage (10) et avec le corps de vanne une chambre d'échappement (11), cette dernière communiquant avec l'extérieur par au moins un alésage (12), la chambre de pilotage (10) pouvant être en relation avec un circuit de pression-dépression au travers d'une tubulure (14), **caractérisée en ce qu'**elle comprend une valve (2), solidaire du corps (1) de vanne et communiquant d'une part avec la capacité (63) et d'autre part avec la chambre de pilotage (10), et un moyen mécanique (6, 60) solidaire de manière permanente de la membrane (4) et assurant l'ouverture de ladite valve (2).

2. Vanne de gonflage et de dégonflage selon la revendication 1, **caractérisée en ce que** le moyen d'ouverture (6) est fixé à la membrane (4).

3. Vanne de gonflage et de dégonflage selon la revendication 2, **caractérisée en ce que** le moyen d'ouverture est constitué d'un pont (6) ou d'un multipode fixé à la membrane (4).

4. Vanne de gonflage et de dégonflage selon la revendication 1, **caractérisée en ce que** le moyen d'ouverture (60) est une calotte, de forme sensiblement hémisphérique, constituée par la partie centrale de la membrane(4).

5. Vanne de gonflage et de dégonflage selon la revendication 4, **caractérisée en ce, que** le couvercle (8) présente une partie centrale (80) de forme sensiblement concave, et la calotte (60) comporte des moyens lui permettant d'adopter successivement deux positions stables, une position concave pour laquelle la calotte (60) est de même concavité que la partie centrale (80) du couvercle (8) et une position convexe pour laquelle la calotte (60) est de concavité inverse par rapport à la partie centrale (80) du couvercle.

6. Vanne de gonflage et de dégonflage selon la revendication 5, **caractérisée en ce que** la calotte (60) de la membrane(4) est partiellement ajourée.

7. Vanne de gonflage et de dégonflage selon la revendication 6, **caractérisée en ce que** les ouvertures (39) de la calotte (60) sont dimensionnées de manière à engendrer des pertes de charges du flux les traversant, ces pertes de charges induisant une différence de pression entre les chambres de pilotage (10) et d'échappement (11).

8. Vanne de gonflage et de dégonflage selon la revendication 3 ou 7, **caractérisée en ce que** la membrane (8) est réalisée en matériau synthétique.

9. Vanne de gonflage et de dégonflage selon la revendication 3 ou 7, **caractérisée en ce que** la membrane (8) est une tôle métallique.

10. Vanne de gonflage et de dégonflage selon la revendication 3 ou 7, **caractérisée en ce que** la membrane (8) est réalisée par surmoulage d'un élastomère sur une armature métallique.

11. Vanne de gonflage et de dégonflage selon l'une des revendications précédentes, **caractérisée en ce que** la surface intérieure (50) du corps (1) de vanne est de forme complémentaire avec la membrane (4), de manière à ce que la membrane (4) épouse parfaitement la forme du corps (1) de vanne lorsqu'elle vient s'appliquer contre celle-ci.

12. Installation de commande à distance du gonflage et du dégonflage d'une capacité comprenant une canalisation reliant la tubulure de la chambre de pilotage à une source de pression-dépression, **caractérisée en ce qu'**elle comprend une vanne de gonflage et de dégonflage selon l'une quelconque des revendications précédentes.

## Claims

1. A valve to inflate, deflate and measure the pressure inside a volume (63), comprising a membrane (4) held between a bonnet (8) and a valve body (1), delimiting a control chamber (10) with the bonnet and an exhaust chamber (11) with the valve body, the exhaust chamber communicating with the exterior by at least one bore (12), the control chamber (10) being able to communicate with a pressure-vacuum circuit via an insert (14), **characterised in that** it comprises a valve (2), integral with the valve body (1) and communicating firstly with the volume (63) and secondly with the control chamber (10), and mechanical means (6, 60) permanently integral with the membrane (4) and ensuring the opening of said valve (2).

2. An inflation and deflation valve according to Claim 1, **characterised in that** the opening means (6) are fastened to the membrane (4).

3. An inflation and deflation valve according to Claim 2, **characterised in that** the opening means are constituted by a bridge (6) or a multipod fastened to the membrane (4).

4. An inflation and deflation valve according to Claim 1, **characterised in that** the opening means (60) are constituted by a cap, substantially hemispherical in shape, formed by the central part of the membrane (4).

5. An inflation and deflation valves according to Claim 4, **characterised in that** the bonnet (8) has a substantially concave shaped central part (80) and the cap (60) incorporates means to enable it to successively adopt two stable positions, a concave position for which the cap (60) is of the same concavity as the central part (80) of the bonnet (8) and a convex position for which the cap (60) is of the opposite concavity with respect to the central part (80) of the bonnet.

6. An inflation and deflation valve according to Claim 5, wherein the cap (60) of the membrane (4) is partly open-worked.

7. An inflation and deflation valve according to Claim 6, wherein the openings (39) of the cap (60) are dimensioned so as to generate loss in the flux passing through them, these losses leading to a difference in pressure between the control chamber (10) and the exhaust chamber (11).

8. An inflation and deflation valve according to Claim 3 or 7, **characterised in that** the membrane (8) is made of a synthetic material.

9. An inflation and deflation valve according to Claim 3 or 7, **characterised in that** the membrane (8) is a metallic sheet.

10. An inflation and deflation valve according to Claim 3 or 7, **characterised in that** the membrane (8) is made by duplicate-moulding of an elastomer onto a metallic frame.

11. An inflation and deflation valve according to one of the above Claims, **characterised in that** the interior surface (50) of the valve body (1) has a shape matching that of the membrane (4), such that the membrane (4) clings perfectly to the valve body (1) when the body is applied against the membrane.

12. The installation of a remote controlled inflation and deflation of a volume comprising ductwork connecting the insert of the control chamber to a pressure-vacuum source, **characterised in that** it comprises an inflation and deflation valve according to any one of the above Claims.

## Patentansprüche

1. Ventil zum Auffüllen, zum Luftablassen und zum Messen des Druckes in einem Volumen (63), umfassend eine Membran (4), die zwischen einem Deckel (8) und einem Ventilkörper (1) gehalten wird, die mit dem Deckel eine Steuerkammer (10) und mit dem Ventilkörper eine Auslasskammer (11) abgrenzt, wobei diese Letztere durch wenigstens eine Bohrung (12) mit der Außenseite kommuniziert, wobei die Steuerkammer (10) über ein Rohr (14) mit einem Druck-Unterdruck-Kreis in Verbindung stehen kann, **dadurch gekennzeichnet, dass** es ein Ventil (2), das fest mit dem Ventilkörper (1) verbunden ist und einerseits mit dem Volumen (63) und andererseits mit der Steuerkammer (10) kommuniziert, und ein mechanisches Mittel (6, 60) umfasst, das auf permanente Weise fest mit der Membran (4) verbunden ist und das Öffnen des genannten Ventils (2) gewährleistet.

2. Ventil zum Auffüllen und zum Luftablassen nach Anspruch 1, **dadurch gekennzeichnet, dass** das Mittel (6) zum Öffnen an der Membran (4) befestigt ist.

3. Ventil zum Auffüllen und zum Luftablassen nach Anspruch 2, **dadurch gekennzeichnet, dass** das Mittel zum Öffnen von einer Brücke (6) oder von einem an der Membran (4) befestigten Multipoden gebildet wird.

4. Ventil zum Auffüllen und zum Luftablassen nach Anspruch 1, **dadurch gekennzeichnet, dass** das Mittel (60) zum Öffnen eine Glocke von im Wesentlichen halbkugeliger Form ist, die vom zentralen Abschnitt der Membran (4) gebildet wird.

5. Ventil zum Auffüllen und zum Luftablassen nach Anspruch 4, **dadurch gekennzeichnet, dass** der Deckel (8) einen zentralen Abschnitt (80) von im Wesentlichen konkaver Form aufweist, und die Glocke (60) Mittel umfasst, die es ihr ermöglichen, nacheinander zwei stabile Positionen einzunehmen, eine konkave Position, für welche die Glocke (60) dieselbe Konkavität aufweist wie der zentrale Abschnitt (80) des Deckels (8), und eine konvexe Position, für welche die Glocke (60) eine in Bezug auf den zentralen Abschnitt (80) des Deckels umgekehrte Konkavität aufweist.

6. Ventil zum Auffüllen und zum Luftablassen nach Anspruch 5, **dadurch gekennzeichnet, dass** die Glocke (60) der Membran (4) teilweise durchbrochen ist.

7. Ventil zum Auffüllen und zum Luftablassen nach Anspruch 6, **dadurch gekennzeichnet, dass** die Öffnungen (39) der Glocke (60) derartig dimensioniert sind, dass Druckverluste des sie durchquerenden Stroms erzeugt werden, wobei diese Druckverluste eine Druckdifferenz zwischen der Steuerkammer (10) und der Auslasskammer (11) induzieren.

8. Ventil zum Auffüllen und zum Luftablassen nach Anspruch 3 oder 7, **dadurch gekennzeichnet, dass** die Membran (8) aus synthetischem Material ausgeführt ist.

9. Ventil zum Auffüllen und zum Luftablassen nach Anspruch 3 oder 7, **dadurch gekennzeichnet, dass** die Membran (8) ein Metallblech ist.

10. Ventil zum Auffüllen und zum Luftablassen nach Anspruch 3 oder 7, **dadurch gekennzeichnet, dass** die Membran (8) durch Abformung eines Elastomers auf einem metallischen Beschlag ausgeführt ist.

11. Ventil zum Auffüllen und zum Luftablassen nach einem der vorhergehenden Ansprüche, **dadurch gekennzeichnet, dass** die innere Fläche (50) des Ventilkörpers (1) eine mit der Membran (4) komplementäre Form derartig besitzt, dass die Membran (4) sich perfekt an die Form des Ventilkörpers (1) anschmiegt, wenn sie an dieser zur Anlage kommt.

12. Einrichtung zur Fernbedienung des Auffüllens und des Luftablassens aus einem Volumen, umfassend ein Leitungssystem, welches das Rohr der Steuerkammer mit einer Druck-Unterdruck-Quelle verbindet, **dadurch gekennzeichnet, dass** sie ein Ventil zum Auffüllen und zum Luftablassen nach einem der vorhergehenden Ansprüche umfasst.
